# NOUVEAU FASCICULE DE BREVET EUROPEEN

(11) **EP 3 375 689 B2**
(45) Date de publication et mention de la décision concernant l'opposition: **12.10.2022**
(45) Mention de la délivrance du brevet: 04.12.2019
(21) Numéro de dépôt: 18161277.1
(22) Date de dépôt: 12.03.2018
(51) Int. Cl.: B61L 3/00, B61L 15/00

(54) **DISPOSITIF D'OPTIMISATION DE LA CONDUITE D'UN VÉHICULE FERROVIAIRE**
OPTIMIERUNGSVORRICHTUNG FÜR DEN BETRIEB EINES SCHIENENFAHRZEUGS
AN OPTIMIZATION DEVICE FOR OPTIMIZING THE DRIVING OF A RAILWAY VEHICLE

(30) Priorité: 13.03.2017 FR 1752031
(43) Date de publication de la demande: 19.09.2018
(73) Titulaire: ALSTOM Holdings, 93400 Saint-Ouen-sur-Seine (FR)
(72) Inventeur: MIGLIANICO, Denis, 75009 Paris (FR); LA DELFA, Salvatore, 59300 Famars (FR); ENJALBERT, Simon, 59880 Saint Saulve (FR); DAHYOT, Rudy, 59540 Caudry (FR); POLET, Philippe, 59313 Valenciennes Cedex 9 (FR); VANDERHÆGEN, Frédéric, 59313 Valenciennes Cedex 9 (FR)
(74) Mandataire: Lavoix

(56) Documents cités:
- WO-A2-2014/037549
- DE-A1-102013 208 185
- DE-A1-102014 215 461
- DE-B3-102015 010 292
- US-B1- 6 805 326
- WINTER J ET AL: "Fahrerassistenz-System", SIGNAL + DRAHT, DVV, vol. 101, no. 10, 1 octobre 2009 (2009-10-01), pages 6-10,12, XP001548183, ISSN: 0037-4997
- MOHAMMAD SABBAGHIAN: "A Stable Speed Advice for Reliable and Safe Rail Traffic", , 2014, Retrieved from the Internet: URL:https://essay.utwente.nl/65114/1/Sabba ghian_MA_MB.pdf

## Description

La présente invention concerne un dispositif d'optimisation de la conduite d'un véhicule ferroviaire.

La consommation d'énergie d'un véhicule ferroviaire est directement liée à la vitesse de celui-ci. Ainsi, il existe des méthodes de détermination d'une vitesse optimale pour le véhicule ferroviaire, permettant de minimiser la consommation d'énergie de ce véhicule, tout en répondant notamment aux exigences d'horaires qu'un véhicule ferroviaire doit habituellement respecter.

Ainsi, on connait déjà, dans l'état de la technique, un dispositif d'optimisation de la conduite d'un véhicule ferroviaire, comportant des moyens de détermination d'une vitesse cible, et des moyens d'indication d'instructions de modification d'une vitesse instantanée du véhicule ferroviaire en vue de l'approcher de la vitesse cible.

Un tel dispositif indique, généralement en temps réel, des instructions à l'attention du conducteur du véhicule, afin qu'il entreprenne des actions correspondant à ces instructions (accélération, freinage, passage en roue libre...) pour approcher la vitesse instantanée du véhicule de la vitesse cible. Cette vitesse cible est la vitesse la plus optimisée pour minimiser la consommation d'énergie du véhicule, compte tenu de diverses contraintes, notamment des exigences d'horaires, des limitations de vitesse et d'exigences de confort. Un tel dispositif est connu par exemple de US 6,805,326 B1.

Le document « A stable speed advice for reliable and safe rail traffic » (Mohammad Sabbaghian, Master Thesis: Industrial Engineering and Management, University of Twente, 2014) divulgue un dispositif d'optimisation de la conduite d'un véhicule ferroviaire, comprenant des moyens de détermination d'instructions de conduite à partir d'une vitesse cible. Les moyens de détermination comportent entre autres des moyens d'étude du comportement du conducteur, la vitesse cible étant déterminée en fonction de ce comportement du conducteur.

L'invention a notamment pour but d'améliorer l'efficacité d'un tel dispositif d'optimisation.

A cet effet, l'invention a notamment pour objet un dispositif d'optimisation de la conduite d'un véhicule ferroviaire, comportant les caractéristiques de la revendication 1.

Avec un dispositif d'optimisation de l'état de la technique, chaque conducteur choisissait sa propre façon d'accélérer et de freiner pour atteindre la vitesse cible, afin de respecter les horaires. En outre, chaque conducteur a sa façon propre de s'adapter aux instructions qui lui sont transmises (temps de réaction, temps d'action, erreurs éventuelles...). Cela entraine une disparité des consommations énergétiques en fonction des comportements des divers conducteurs, et plus particulièrement des surconsommations énergétiques.

Le dispositif d'optimisation selon l'invention détermine les instructions de conduite en prenant en compte le comportement du conducteur. Ainsi, le dispositif d'optimisation s'adapte spécifiquement à ce conducteur et à ses habitudes de conduite.

Les performances du dispositif d'optimisation sont donc améliorées.

Un dispositif d'optimisation selon l'invention peut comporter en outre l'une ou plusieurs des caractéristiques suivantes, prises seules ou selon toute combinaison techniquement envisageable.
- Les moyens d'étude du comportement sont configurés pour évaluer une première durée entre l'indication d'une instruction de conduite par les moyens d'indication (20), et l'enclenchement d'une mise en oeuvre de cette instruction par le conducteur.
- Les moyens d'étude du comportement sont configurés pour évaluer le temps mis par le conducteur pour mettre des moyens de commande du véhicule dans une configuration adéquate en fonction de l'instruction de conduite reçue.
- Les moyens d'étude du comportement sont configurés pour détecter des erreurs commises par le conducteur suite à une instruction de conduite reçue.
- Les moyens de détermination comportent des moyens de stockage de données cartographiques, fournissant des informations relatives à l'environnement dans lequel évolue le véhicule ferroviaire.
- Les moyens de détermination comportent des moyens de stockage de données relatives au véhicule ferroviaire et à la consommation du véhicule ferroviaire.
- Les moyens de détermination comportent des moyens de stockage de données de tables relatives à des horaires devant être respectés par le véhicule ferroviaire.
- Les moyens d'étude de comportement sont configurés pour déterminer récursivement des paramètres liés au comportement du conducteur, à partir d'un algorithme d'identification, en vue d'une auto-adaptation de la vitesse cible et des instructions à transmettre au conducteur.

L'invention concerne également un procédé d'optimisation de la conduite d'un véhicule ferroviaire au moyen d'un dispositif d'optimisation tel que défini précédemment, comportant :
- la détermination d'instructions de conduite à partir d'une vitesse cible, et
- l'indication des instructions de conduite à l'attention d'un conducteur du véhicule ferroviaire, en vue d'approcher une vitesse instantanée du véhicule ferroviaire de la vitesse cible,
caractérisé en ce qu'il comporte une étude du comportement du conducteur, la détermination de la vitesse cible étant réalisée en fonction de ce comportement du conducteur.

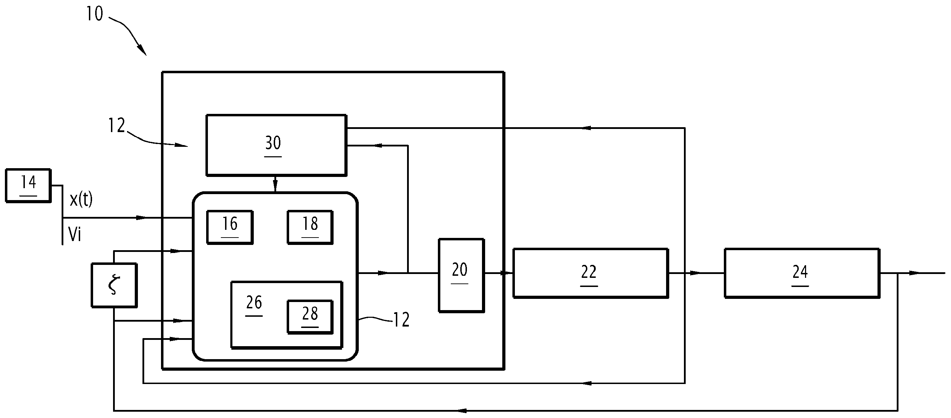

L'invention sera mieux comprise à la lecture de la description qui va suivre, donnée uniquement à titre d'exemple et faite en se référant à la figure annexée, représentant schématiquement un dispositif d'optimisation selon un exemple de mode de réalisation de l'invention.

On a représenté sur la figure un dispositif 10 d'optimisation de la conduite d'un véhicule ferroviaire, destiné à équiper ce véhicule ferroviaire.

Le véhicule ferroviaire étant destiné à circuler sur une voie ferrée, il suit un parcours prédéfini, si bien qu'il est possible de prévoir une vitesse optimale de déplacement de ce véhicule ferroviaire, notamment afin de minimiser la consommation d'énergie du véhicule, tout en prenant en compte les horaires que doit respecter ce véhicule, parmi d'autres paramètres.

La voie ferrée comporte notamment une pluralité de stations, auxquelles le véhicule ferroviaire est susceptible de s'arrêter.

Le dispositif d'optimisation 10 comporte des moyens 12 de détermination d'instructions de conduite à partir d'une vitesse cible V_{c}. La vitesse cible V_{c}, correspond, par exemple, à une vitesse optimale permettant de limiter la consommation d'énergie du véhicule ferroviaire. Cette vitesse cible V_{c} est déterminée en temps réel, cette vitesse cible V_{c} changeant constamment au cours du temps, notamment en fonction de la position x(t) à laquelle se trouve le véhicule ferroviaire sur la voie ferrée.

Afin de pouvoir déterminer cette position x(t), le dispositif d'optimisation 10 comporte de manière classique des moyens de localisation 14, par exemple un dispositif de guidage par satellite.

Les moyens de détermination 12 comportent des moyens 16 de calcul en temps réel de la vitesse cible V_{c}, comprenant un algorithme de calcul déterminant la vitesse cible V_{c} en fonction de paramètres, qui vont être décrits ultérieurement. De tels moyens de calcul en temps réel 16 sont notamment propres à prendre en compte un éventuel retard ou une avance sur les horaires que doit respecter le véhicule ferroviaire.

Les moyens de détermination 12 comportent par ailleurs des moyens 18 de comparaison d'une vitesse instantanée Vᵢ du véhicule ferroviaire avec la vitesse cible V_{c} renseignée par les moyens de calcul 16. Avantageusement, un intervalle de vitesse cible est défini autour de la vitesse cible V_{c}, et les moyens de comparaison 18 comparent la vitesse instantanée Vᵢ avec cet intervalle de vitesse cible.

Le dispositif d'optimisation 10 comporte par ailleurs des moyens 20 d'indication des instructions de conduite à destination d'un conducteur 22 du véhicule ferroviaire.

Les moyens de comparaison 18 fournissent les résultats des comparaisons aux moyens d'indication 20.

Les instructions de conduite comportent notamment des instructions de modification de la vitesse instantanée Vᵢ en vue de l'approcher de la vitesse cible V_{c}, notamment une instruction d'augmentation de la vitesse lorsque la vitesse instantanée Vᵢ est inférieure à la vitesse cible V_{c}, une instruction de réduction de la vitesse lorsque la vitesse instantanée Vᵢ est supérieure à la vitesse cible V_{c}, et une instruction de maintien de vitesse lorsque la vitesse instantanée Vᵢ est sensiblement égale à la vitesse cible V_{c}.

Les moyens d'indication 20 peuvent comporter différents dispositifs d'affichage envisageables.

Par exemple, les moyens d'indication 20 comportent un panneau d'affichage, notamment un écran d'affichage, propre à afficher des instructions de conduite, sous forme de pictogrammes d'instruction de conduite.

En variante ou de manière complémentaire, les moyens d'indication 20 comportent un dispositif d'affichage tête haute, propre à afficher les instructions de conduite dans un champ de vision du conducteur.

Afin de modifier la vitesse instantanée Vᵢ, en fonction des instructions reçues, le conducteur 22 agit sur des moyens classiques 24 de commande de niveau de traction, comprenant généralement un levier de commande de traction / freinage. Ce levier de commande est actionné par le conducteur du véhicule ferroviaire, pour appliquer à ce véhicule ferroviaire un niveau de traction ou de freinage permettant de modifier la vitesse instantanée Vᵢ, souhaitée par le conducteur, en vue de l'approcher de la vitesse cible V_{c}.

Les paramètres pris en compte par les moyens de détermination 12 pour le calcul de la vitesse cible V_{c} vont maintenant être décrits.

Certains de ces paramètres sont classiquement utilisés dans les dispositifs d'optimisation de l'état de la technique. L'homme du métier saura aisément choisir et mettre en oeuvre ces paramètres, de la même manière que dans l'état de la technique.

Les moyens de détermination 12 comportent des moyens 26 de récupération de ces paramètres, comprenant notamment des moyens 28 de stockage de bases de données, stockant certains de ces paramètres qui sont des fonctions de la position x(t) du véhicule sur la voie ferrée.

Des premiers paramètres sont formés par des données de cartographie de l'environnement, plus particulièrement des données relatives à la forme de la voie ferrée, notamment relatives aux localisations de pentes et de descentes, de virages et de lignes droites. Les données de cartographie comportent également toutes autres données locales spécifiques, telles que des limitations de vitesses, des carrefours, et/ou des zones dites dangereuses (sortie de virage, zones piétonnes). Cette cartographie est importante, car elle influe grandement sur le choix de la vitesse cible en toute position du véhicule sur la voie ferrée. Les données de cartographie sont par exemple stockées dans les moyens de stockage 28.

D'autres paramètres, également stockés sous forme de base de données dans les moyens de stockage 28, sont formés par des données de procédures de conduite. Les données de procédures de conduite sont des instructions générales de conduite, généralement définies par un exploitant, que le conducteur doit respecter. De telles procédures de conduite imposent par exemple une vitesse maximale en arrivant en station, ainsi que des limites de forces d'accélération et de freinage du véhicule, pour des raisons de confort des passagers.

D'autres paramètres, également stockés sous forme de base de données dans les moyens de stockage 28, sont formés par des tables horaires. Les tables horaires informent du temps disponible pour réaliser une mission entre deux stations. Ces données permettent de définir le profil d'accélération ou de freinage pour parcourir la distance correspondant à la mission. En effet, à titre d'exemple, on accélère davantage pour parcourir une distance de 800 mètres en 2 minutes plutôt que pour parcourir cette même distance en 4 minutes.

D'autres paramètres sont également pris en considération, tels que la position x(t) du véhicule ferroviaire sur la voie ferrée, la vitesse instantanée Vᵢ du véhicule ferroviaire, la position des moyens de commandes de conduite 24 du véhicule, les procédures spéciales éventuellement engagées (par exemple la désactivation de la Veille Automatique à Contrôle de Maintien d'Appui (VACMA), la conduite à vue, la procédure de manœuvre...), les valeurs de la tension d'alimentation (car des fluctuations de la tension d'alimentation entrainent des changements dans la consommation), la masse totale du système (passagers inclus), l'existence d'un système de récupération d'énergie (et sous quelle forme), la signalisation, etc.

Toutes ces données permettent de manière classique de calculer à chaque instant une vitesse cible V_{c} que doit respecter le véhicule ferroviaire pour une meilleure consommation énergétique.

Afin d'optimiser cette consommation énergétique, les moyens de détermination 12 du dispositif d'optimisation 10 selon l'invention comportent en outre des moyens auto-adaptatifs 30 d'étude du comportement du conducteur 22, la vitesse cible V_{c} étant déterminée à chaque instant en fonction de ce comportement du conducteur.

Ces moyens d'étude 30 permettent d'optimiser les instructions de conduite compte tenu des habitudes de conduite du conducteur 22.

Ces moyens d'étude 30 sont configurés pour réaliser un modèle neuromusculaire du conducteur 22, réalisé à partir des instructions de conduite transmises au conducteur et de la commande appliquée par celui-ci.

Le modèle neuromusculaire du conducteur modélise le comportement du conducteur pour transmettre une commande au véhicule (modifier la position du manipulateur de conduite pour suivre les instructions transmises). Le modèle neuromusculaire du conducteur comporte les paramètres suivants :
- Le retard (en secondes), défini comme la différence entre l'instant où l'instruction est transmise et l'instant où le conducteur réalise l'action. Le retard est généralement compris entre 0 et 1 seconde ;
- Le temps neuromusculaire (en secondes), défini comme l'habileté du conducteur pour atteindre la position adéquate du manipulateur, et la dynamique musculaire du conducteur. Le temps neuromusculaire est par exemple déterminé à partir d'une méthode d'identification de paramètres issue de modèles de calcul (tels que « modèle prédictif de calcul d'erreur », « les moindres carré récursif »). Le temps neuromusculaire est généralement compris entre 0,1 et 2,4 secondes ;
- Le gain, défini comme la correction d'une erreur réalisée par le conducteur. Le gain est déterminé à partir d'une méthode d'identification de paramètres issue de modèles de calcul (tels que « modèle prédictif de calcul d'erreur », « les moindres carré récursif »). Le gain est généralement compris entre 0,3 et 2,5 secondes.

Les moyens d'étude de comportement 30 sont configurés pour déterminer récursivement des paramètres liés au comportement du conducteur, à partir d'un algorithme d'identification, en vue d'une auto-adaptation de la vitesse cible et des instructions à transmettre au conducteur 22. Plus particulièrement, les identifications de ces paramètres sont récursivement mise à jour selon un modèle prédictif de calcul d'erreur entre l'instruction réalisée et l'instruction transmise au conducteur.

Ainsi, dans le dispositif d'optimisation 10 selon l'invention, le conducteur 22 intervient, tout comme le véhicule et son modèle de consommation, dans la détermination de la vitesse cible.

Dans les moyens de calcul 16, le retard, le temps neuromusculaire et le gain sont pris en compte pour la détermination de la vitesse cible par la mise à jour des paramètres de modèle de calcul. La mise à jour est effectuée après chaque identification de paramètres.

Les moyens de détermination 12 déterminent la vitesse cible V_{c} au moyen d'un algorithme d'optimisation, déterminant en temps réel la vitesse cible V_{c} sur la base des paramètres évoqués précédemment.

Cet algorithme d'optimisation est configuré pour déterminer des vitesses possibles pour réaliser la mission dans les temps impartis et respectant les contraintes environnementales. La vitesse qui permet de minimiser l'effort de traction pour l'ensemble du parcours est ensuite conservée et transmise au conducteur 22. Cette vitesse cible est calculée chaque seconde.

Il apparaît clairement que le dispositif d'optimisation selon l'invention permet de générer des instructions qui considèrent l'évolution du comportement du conducteur en temps réel pour améliorer l'optimisation de la consommation d'énergie.

Le dispositif 10 est auto-adaptatif au comportement du conducteur (grâce à l'identification des paramètres du conducteur 22), ce qu'aucun autre système d'aide d'éco-conduite connu ne fait.

Le dispositif 10 permet de donner une consigne d'éco-conduite adaptée au conducteur 22 tout en respectant la contrainte de minimisation d'effort de traction afin de réduire la consommation d'énergie. De plus, le système fonctionnant en continu, l'exécution de la tâche de conduite dans le temps imparti par la table horaire (en situation nominale) respectant les limitations de vitesse est garantie.

## Revendications

1. Dispositif (10) d'optimisation de la conduite d'un véhicule ferroviaire, comportant des moyens (12) de détermination d'instructions de conduite à partir d'une vitesse cible, et des moyens (20) d'indication des instructions de conduite à l'attention d'un conducteur (22) du véhicule ferroviaire, en vue d'approcher une vitesse instantanée du véhicule ferroviaire de la vitesse cible, **caractérisé en ce que** les moyens de détermination (12) comportent des moyens (30) d'étude du comportement du conducteur (22), la vitesse cible étant déterminée en fonction de ce comportement du conducteur (22), **en ce que** les moyens de détermination (12) comportent des moyens (16) de calcul en temps réel de la vitesse cible, **en ce que** les moyens d'étude (30) sont configurés pour réaliser un modèle neuromusculaire du conducteur (22), réalisé à partir des instructions de conduite transmises au conducteur et de la commande appliquée par celui-ci, **en ce que** le modèle neuromusculaire du conducteur comporte les paramètres suivants :
- le retard, défini comme la différence entre l'instant où l'instruction est transmise et l'instant où le conducteur réalise l'action;
- le temps neuromusculaire, défini comme l'habileté du conducteur pour atteindre la position adéquate du manipulateur, et la dynamique musculaire du conducteur ; et
- le gain, défini comme la correction d'une erreur réalisée par le conducteur; et **en ce que** dans les moyens de calcul (16), le retard, le temps neuromusculaire et le gain sont pris en compte pour la détermination de la vitesse cible par la mise à jour des paramètres de modèle de calcul.

2. Dispositif d'optimisation (10) selon la revendication 1, dans lequel les moyens d'étude du comportement (30) sont configurés pour évaluer une première durée entre l'indication d'une instruction de conduite par les moyens d'indication (20), et l'enclenchement d'une mise en œuvre de cette instruction par le conducteur (22).

3. Dispositif d'optimisation (10) selon la revendication 1 ou 2, dans lequel les moyens d'étude du comportement (30) sont configurés pour évaluer le temps mis par le conducteur (22) pour mettre des moyens de commande (24) du véhicule dans une configuration adéquate en fonction de l'instruction de conduite reçue.

4. Dispositif d'optimisation (10) selon l'une quelconque des revendications précédentes, dans lequel les moyens (30) d'étude du comportement sont configurés pour détecter des erreurs commises par le conducteur (22) suite à une instruction de conduite reçue.

5. Dispositif d'optimisation (10) selon l'une quelconque des revendications précédentes, dans lequel les moyens de détermination (12) comportent des moyens de stockage (18) de données cartographiques, fournissant des informations relatives à l'environnement dans lequel évolue le véhicule ferroviaire.

6. Dispositif d'optimisation (10) selon l'une quelconque des revendications précédentes, dans lequel les moyens de détermination (12) comportent des moyens de stockage (18) de données relatives au véhicule ferroviaire et à la consommation du véhicule ferroviaire.

7. Dispositif d'optimisation (10) selon l'une quelconque des revendications précédentes, dans lequel les moyens de détermination (12) comportent des moyens de stockage (18) de données de tables relatives à des horaires devant être respectés par le véhicule ferroviaire.

8. Dispositif d'optimisation (10) selon l'une quelconque des revendications précédentes, dans lequel les moyens d'étude de comportement (30) sont configurés pour déterminer récursivement des paramètres liés au comportement du conducteur, à partir d'un algorithme d'identification, en vue d'une auto-adaptation de la vitesse cible et des instructions à transmettre au conducteur (22).

9. Procédé d'optimisation de la conduite d'un véhicule ferroviaire au moyen d'un dispositif d'optimisation (10) selon l'une quelconque des revendications 1 à 8, comportant :
- la détermination d'instructions de conduite à partir d'une vitesse cible, et
- l'indication des instructions de conduite à l'attention d'un conducteur (22) du véhicule ferroviaire, en vue d'approcher une vitesse instantanée du véhicule ferroviaire de la vitesse cible,
**caractérisé en ce qu'**il comporte une étude du comportement du conducteur (22), la détermination de la vitesse cible étant réalisée en fonction de ce comportement du conducteur (22).

## Patentansprüche

1. Vorrichtung (10) zum Optimieren des Fahrens eines Schienenfahrzeugs, welche aufweist Mittel (12) zum Ermitteln von Fahranweisungen ausgehend von einer Ziel-Geschwindigkeit und Mittel (20) zum Anzeigen der Fahranweisungen an den Fahrer (22) des Schienenfahrzeugs im Hinblick darauf, eine gegenwärtige Geschwindigkeit des Schienenfahrzeugs an die Ziel-Geschwindigkeit anzunähern, **dadurch gekennzeichnet, dass** die Mittel zum Ermitteln (12) aufweisen Mittel (30) zum Erlernen des Verhaltens des Fahrers (22), wobei die Ziel-Geschwindigkeit in Abhängigkeit von diesem Verhalten des Fahrers (22) ermittelt wird,
dass die Mittel (12) zum Ermitteln Mittel (16) zur Echtzeit-Berechnung der Zielgeschwindigkeit umfassen, dass die Mittel (30) zum Erlernen so konfiguriert sind, dass sie ein neuromuskuläres Modell des Fahrers (22) erstellen, das ausgehend von den an den Fahrer übermittelten Fahranweisungen und dem von ihm ausgeführten Befehl erstellt wird, dass das neuromuskuläre Modell des Fahrers die folgenden Parameter umfasst:
- die Verzögerung, definiert als die Differenz zwischen dem Zeitpunkt, zu dem die Anweisung übermittelt wird, und dem Zeitpunkt, zu dem der Fahrer die Handlung ausführt;
- die neuromuskuläre Zeit, definiert als die Geschicklichkeit des Fahrers, um die entsprechende Position des Manipulators zu erreichen, und die muskuläre Dynamik des Fahrers; und
- die Verstärkung, die als Korrektur eines vom Fahrer begangenen Fehlers definiert ist; und dass in den Mitteln zur Berechung (16) die Verzögerung, die neuromuskuläre Zeit und die Verstärkung für die Bestimmung der Zielgeschwindigkeit berücksichtigt werden, indem die Parameter des Berechnungsmodells aktualisiert werden.

2. Optimierungsvorrichtung (10) gemäß Anspruch 1, wobei die Mittel zum Erlernen des Verhaltens (30) eingerichtet sind, um eine erste Dauer zwischen dem Anzeigen einer Fahranweisung mittels der Mittel zum Anzeigen (20) und dem Einleiten eines Durchführens dieser Anweisung mittels des Fahrers (22) zu evaluieren.

3. Optimierungsvorrichtung (10) gemäß Anspruch 1 oder 2, wobei die Mittel zum Erlernen des Verhaltens (30) eingerichtet sind, um die Zeit zu evaluieren, welche sich der Fahrer (22) genommen hat, um Mittel zum Steuern (24) des Fahrzeuges in Abhängigkeit von der empfangenen Fahranweisung in eine adäquate Konfiguration zu bringen.

4. Optimierungsvorrichtung (10) gemäß irgendeinem der vorherigen Ansprüche, wobei die Mittel (30) zum Erlernen des Verhaltens eingerichtet sind, um Fehler zu detektieren, welche von dem Fahrer (22) in Folge einer empfangenen Fahranweisung begangen werden.

5. Optimierungsvorrichtung (10) gemäß irgendeinem der vorherigen Ansprüche, wobei die Mittel zum Ermitteln (12) aufweisen Mittel zum Speichern (18) von kartographischen Daten, welche Informationen bezüglich der Umgebung, in welcher sich das Schienenfahrzeug bewegt, bereitstellen.

6. Optimierungsvorrichtung (10) gemäß irgendeinem der vorherigen Ansprüche, wobei die Mittel zum Ermitteln (12) aufweisen Mittel zum Speichern (18) von Daten bezüglich des Schienenfahrzeugs und des Verbrauchs des Schienenfahrzeugs.

7. Optimierungsvorrichtung (10) gemäß irgendeinem der vorherigen Ansprüche, wobei die Mittel zum Ermitteln (12) aufweisen Mittel zum Speichern (18) von Tabellendaten bezüglich Fahrplänen, welche von dem Schienenfahrzeug eingehalten werden müssen.

8. Optimierungsvorrichtung (10) gemäß irgendeinem der vorherigen Ansprüche, wobei die Mittel zum Erlernen des Verhaltens (30) eingerichtet sind, um rekursiv Parameter zu ermitteln, welche sich auf das Verhalten des Fahrers beziehen, ausgehend von einem Identifikationsalgorithmus im Hinblick auf eine Auto-Anpassung der Ziel-Geschwindigkeit und auf Anweisungen, welche zu dem Fahrer (22) zu übertragen sind.

9. Verfahren zum Optimieren des Fahrens eines Schienenfahrzeugs mittels einer Optimierungsvorrichtung (10) gemäß irgendeinem der Ansprüche 1 bis 8, welches aufweist:
- das Ermitteln von Fahranweisungen ausgehend von einer ZielGeschwindigkeit und
- das Anzeigen der Fahranweisungen an den Fahrer (22) des Schienenfahrzeugs im Hinblick darauf, eine gegenwärtige Geschwindigkeit des Schienenfahrzeugs an die Ziel-Geschwindigkeit anzunähern,
**dadurch gekennzeichnet, dass** es aufweist ein Erlernen des Verhaltens des Fahrers (22), wobei das Ermitteln der Ziel-Geschwindigkeit in Abhängigkeit von diesem Verhalten des Fahrers (22) realisiert wird.

## Claims

1. Device (10) for optimising the driving of a railway vehicle, comprising means (12) for determining driving instructions from a target speed, and means (20) for indicating driving instructions for the attention of a driver (22) of the railway vehicle, in order to bring an instantaneous speed of the railway vehicle closer to the target speed, **characterised in that** the determination means (12) comprise means (30) for studying the behaviour of the driver (22), the target speed being determined as a function of the behaviour of the driver (22) **in that** the determination means (12) comprise means (16) for calculating in real-time the target speed, **in that** the means (30) for studying are configured for establishing a neuromuscular model of the driver (22), established from driving instructions transmitted to the driver and the command applied by him/her, **in that** the neuromuscular model of the driver comprises the following parameters:
- the lag, defined as the difference between the instant where the instruction is transmitted and the instant where the driver realises the action;
- the neuromuscular time, defined as the dexterity of the driver for reaching the appropriate position of the manipulator, and the muscular dynamics of the driver; and
- the gain, defined as the correction of an error committed by the driver; and **in that** in the means for calculating (16), the lag, the neuromuscular time and the gain are taken into account for the determination of the target speed by updating the parameters of the calculating model.

2. Optimisation device (10) according to claim 1, wherein the means for studying the behaviour (30) are configured to evaluate a first period of time between the indication of a driving instruction by the indication means (20) and the initiation of the implementation of that instruction by the driver (22).

3. Optimisation device (10) according to claim 1 or 2, wherein the means for studying the behaviour (30) are configured to evaluate the time taken by the driver (22) to place control means (24) of the vehicle in a suitable configuration as a function of the received driving instruction.

4. Optimisation device (10) according to any one of the preceding claims, wherein the means (30) for studying the behaviour are configured to detect errors made by the driver (22) following a received driving instruction.

5. Optimisation device (10) according to any one of the preceding claims, wherein the determination means (12) comprise storage means (18) for map data, providing information relating to the environment in which the railway vehicle is travelling.

6. Optimisation device (10) according to any one of the preceding claims, wherein the determination means (12) comprise storage means (18) for data relating to the railway vehicle and to the consumption of the railway vehicle.

7. Optimisation device (10) according to any one of the preceding claims, wherein the determination means (12) comprise storage means (18) for data of tables relating to timetables with which the railway vehicle must comply.

8. Optimisation device (10) according to any one of the preceding claims, wherein the means for studying behaviour (30) are configured to recursively determine parameters associated with the behaviour of the driver, from an identification algorithm, with the aim of auto-adapting the target speed and the instructions to be transmitted to the driver (22).

9. Method for optimising the driving of a railway vehicle by means of an optimisation device (10) according to any one of claims 1 to 8, comprising:
- determining driving instructions from a target speed, and
- indicating driving instructions for the attention of a driver (22) of the railway vehicle, with the aim of bringing an instantaneous speed of the railway vehicle closer to the target speed,
**characterised in that** it comprises studying the behaviour of the driver (22), the target speed being determined as a function of the behaviour of the driver (22).
